# EUROPÄISCHE PATENTSCHRIFT

(11) **EP 0 913 426 B1**
(45) Veröffentlichungstag und Bekanntmachung des Hinweises auf die Patenterteilung: **14.11.2007**
(21) Anmeldenummer: 98119203.2
(22) Anmeldetag: 12.10.1998
(51) Int. Cl.: C08K 3/22, C08J 3/22

(54) **Flammfeste thermoplastische aluminiumhydroxidhaltige Formmassen**
Thermoplastic flame retardant molding compositions containing aluminium hydroxide
Masses à mouler thermoplastiques et retardatrices à la flamme contenant de l'hydroxyde d'aluminium

(30) Priorität: 31.10.1997 DE 19748382
(43) Veröffentlichungstag der Anmeldung: 06.05.1999
(73) Patentinhaber: Ticona GmbH, 65451 Kelsterbach (DE)
(72) Erfinder: Kleiner, Hans-Jerg Dr., 61476 Kronberg (DE)

(56) Entgegenhaltungen:
- DATABASE WPI Section Ch, Week 8736 Derwent Publications Ltd., London, GB; Class A23, AN 87-254555 XP002092762 & JP 62 176817 A (MITSUI TOATSU CHEM INC) , 3. August 1987
- DATABASE WPI Section Ch, Week 9649 Derwent Publications Ltd., London, GB; Class A23, AN 96-492935 XP002092763 & JP 08 252823 A (FUJITSU LTD) , 1. Oktober 1996

## Beschreibung

Thermoplastische Polyesterformmassen werden in vielen unterschiedlichen Bereichen verwendet, z.B. im Automobilbereich, zur Herstellung von Gehäusen, insbesondere für Elektrogeräte, im Bau- oder Hygienesektor.

Für viele Anwendungen ist es erforderlich, die thermoplastischen Polyesterformmassen flammfest auszurüsten. Übliche preiswerte Flammschutzmittel wie Aluminiumhydroxide, die die helle Eigenfarbe der Formmassen nicht beeinträchtigen, wurden bisher als ungeeignet angesehen, da diese bei der Verarbeitung der Formmassen instabil werden. So berichtet S.M. Aharoni in Journal of Applied Polymer Science, Band 29, Seite 853 ff. (1984) und EP-A-0,543,262, daß sich bei der Verarbeitungstemperatur der Formmasse Wasser abspaltet. Dieses Wasser stört einerseits den Formgebungsprozess und führt andererseits zu einem hydrolytischen Abbau des Molekulargewichtes des thermoplastischen Polyesters.

Es bestand daher ein Bedürfnis nach thermoplastischen Polyesterformmassen, die einerseits preiswerte Flammschutzmittel auf Basis von Aluminiumhydroxiden enthalten und andererseits bei der nachfolgenden Verarbeitung der Polyesterformmasse kein unerwünschtes Wasser abspalten.

Es wurde nun überraschenderweise gefunden, daß man aluminiumhydroxidhaltige thermoplastische Polyesterformmasse erhält, die die vorstehenden Nachteile nicht aufweist, wenn man ein Gemisch aus 60 - 90 Gew.-% eines thermoplastischen Polyesters mit 10 - 40 Gew.-% Aluminiumhydroxid bei 230 bis 330°C im Vakuum behandelt, wobei pro Mol eingesetztes Aluminiumhydroxid zwischen 0,9 und 1,2 Mol abgespaltenes Wasser entfernt wird.

Gegenstand der vorliegenden Erfindung ist ein Verfahren zur Herstellung aluminiumhydroxidhaltiger thermoplastischer Polyesterformmassen gekennzeichnet durch Behandlung eines Gemisches enthaltend 60 - 90 Gew.-% eines thermoplastischen Polyesters und 10 - 40 Gew.-% Aluminiumhydroxid bei 230 bis 330°C im Vakuum, wobei pro Mol eingesetztes Aluminiumhydroxid zwischen 0,9 und 1,2 Mol Wasser entfernt wird.

Die thermoplastischen Polyester im Sinne der vorliegenden Erfindung sind an sich bekannt. Vorzugsweise werden Polyester verwendet, die einen aromatischen Ring in der Hauptkette enthalten. Der aromatische Ring kann auch substituiert sein, z.B. durch Halogene, wie Chlor, Brom und Fluor und/oder durch C₁-C₄-Alkylgruppen, wie z.B. Methyl-, Ethyl-, i- bzw. n-Propyl- und i- bzw. n- bzw. t-Butylgruppen.

Die Herstellung der Polyester kann durch Reaktion von Dicarbonsäuren, deren Ester oder anderer esterbildender Derivate mit Dihydroxyverbindungen in an sich bekannter Weise erfolgen.

Als Dicarbonsäuren kommen beispielsweise aliphatische und aromatische Dicarbonsäuren in Frage, die auch als Mischung eingesetzt werden können. Nur beispielsweise seien hier Naphthalindicarbonsäuren, Terephthalsäure, Isophthalsäure, Adipinsäure, Azelainsäure, Sebacinsäure, Dodecandisäure und Cyclohexandicarbonsäuren, Mischungen dieser Carbonsäuren und esterbildende Derivate derselben genannt.

Als Dihydroxyverbindungen werden vorzugsweise Diole mit 2 bis 10 C-Atomen, besondere bevorzugt Ethylenglykol, 1,3-Propandiol, 1,4-Butandiol, 1,4-Butendiol und 1,6-Hexandiol verwendet; es können jedoch auch 1,4-Hexandiol, 1,4-Cyclohexandiol, 1,4-Di-(hydroxymethyl)cyclohexan, Bisphenol A, Neopentylglykol, Mischungen dieser Diole sowie esterbildende Derivate derselben eingesetzt werden.

Polyester aus Terephthalsäure oder Naphthalindicarbonsäuren und einer C₂-C₆-Diolkomponente, z.B. Polyethylenterephthalat, Polyethylennaphthalat, Polypropylenterephthalat oder Polybutylenterephthalat oder deren Mischungen werden besonders bevorzugt.

Selbstverständlich können auch Polyesterblockcopolymere wie Copolyetherester verwendet werden. Derartige Produkte sind an sich bekannt und in der Literatur, z.B. in der US-A-3 651 014, beschrieben. Auch im Handel sind entsprechende Produkte erhältlich, z.B. Hytrel® (DuPont).

Bei dem im Sinne der Erfindung verwendeten Aluminiumhydroxid handelt es sich um natürliches oder synthetisches Aluminiumhydroxid Al(OH)₃. Beispiele hierfür sind γ-Al(OH)₃ wie Gibbsit oder Hydrargillit, α-Al(OH)₃ wie Byerit, sowie um Gemische derselben. Bevorzugt wird handelsübliches Aluminiumhydroxid eingesetzt. Dieses kann beispielsweise von der Firma Riedel-de-Haën unter der Artikelnummer 11033 in entsprechender Qualität bezogen werden.

Neben den thermoplastischen Polyestern und dem Aluminiumhydroxid können die erfindungsgemäßen Formmassen noch 0 bis 2 Gew.-% fluorhaltige Ethylenpolymerisate enthalten. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylenhexafluorpropylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag 1952, Seite 484 bis 494 und von Wall in "Fluorpolymers" (Wiley Interscience, 1972) beschrieben.

Diese fluorhaltigen Ethylenpolymerisate liegen homogen verteilt in der Formmasse vor und weisen bevorzugt eine Teilchengröße d₅₀ (Zahlenmittelwert) im Bereich von 0,05 bis 10 µm, insbesondere von 0,1 bis 5 µm, auf.

Weiterhin können die erfindungsgemäßen thermoplastischen Formmassen 0 bis 40 Gew.-% faser- oder teilchenförmige Füllstoffe oder deren Mischungen enthalten, die natürlich kein Aluminiumhydroxid sind. In der Regel sind dies übliche Zusatzstoffe und Verarbeitungshilfsmittel wie Stabilisatoren, Oxidationsverzögerer, Mittel gegen Wärmezersetzung, Färbemittel wie Farbstoffe und Pigmente, faser- und pulverförmige Füll- und Verstärkungsmittel, Keimbildungsmittel, Kristallisationsbeschleuniger, Weichmacher usw.

Als Beispiele für Oxidationsverzögerer und Wärmestabilisator sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Iodiden, sterisch gehinderte Phenole, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Cadmiumselenid, Phthalocyanine, Ultramarinblau und Ruß als Farbstoffe zugesetzt werden, sowie faser- und pulverförmige Füllstoffe und Verstärkungsmittel. Beispiele für letztere sind Kohlenstoffasern, Glasfasern, amorphe Kieselsäure, Asbest, Calcium-silicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im allgemeinen bis zu 40 Gew.-%, bevorzugt bis zu 30 Gew.-%, insbesondere bis zu 25 Gew.-%.

Als Keimbildungsmittel können z.B. Talkum, Calciumfluorid, Natriumphenylphosphinat, Aluminiumoxid und feinteiliges Polytetrafluorethylen eingesetzt werden.

Als Kristallisationsbeschleuniger können beispielsweise die in EP-A-0,214,581 genannten eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur besseren Verträglichkeit mit dem thermoplastischen Polyester sind Minerale und Füllstoffe gegebenenfalls mit einem Haftvermittler ausgerüstet. Bevorzugt sind Glycidyl-, Vinyl- und Aminoalkyltrialkoxysilane.

Weiterhin können die erfindungsgemäßen thermoplastischen Formmassen 0 bis 60, vorzugsweise 0 bis 40 Gew.-% eines schlagzäh modifizierten Polymeren (im folgenden auch als kautschukelastisches Polymerisat oder Elastomer bezeichnet) enthalten.

Bevorzugte Arten von solchen Elastomeren sind die sogenannten Ethylen-Propylen-(EPM)- bzw. Ethylen-Propylen-Dien-(EPDM)-Kautschuke.

EPM-Kautschuke haben im allgemeinen praktisch keine Doppelbindungen mehr während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Iso-propenyl-5-norbornen und Tricyclodiene wie 3-Methyl-tricyclo(5.2.1.0.2.6^{2,6})-3,8-decadien oder deren Mischungen genannt. Bevorzugt werden Hexa-1,5-dien, 5-ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

EPM- bzw. EPDM-Kautschuke können vorzugsweise auch mit reaktiven Carbonsäuren oder deren Derivaten gepfropft sein. Hier seien z.B. Acrylsäure, Methacrylsäure und deren Derivate, z.B. Glycidyl(meth)acrylat, sowie Maleinsäureanhydrid genannt.

Eine weitere Gruppe bevorzugter Kautschuke sind Copolymere des Ethylens mit Acrylsäure und/oder Methacrylsäure und/oder den Estern dieser Säuren. Zusätzlich können die Kautschuke noch Dicarbonsäuren wie Maleinsäure und Fumarsäure oder Derivate dieser Säuren, z.B. Ester und Anhydride, und/oder Epoxy-Gruppen enthaltende Monomere enthalten. Diese Dicarbonsäurederivate bzw. Epoxygruppen enthaltende Monomere werden vorzugsweise durch Zugabe von Dicarbonsäure- bzw. Epoxygruppen enthaltenden Monomeren der allgemeinen Formeln I oder II oder III oder IV zum Monomerengemisch in den Kautschuk eingebaut

R¹C(COOR²) = C(COOR³)R⁴ (I)

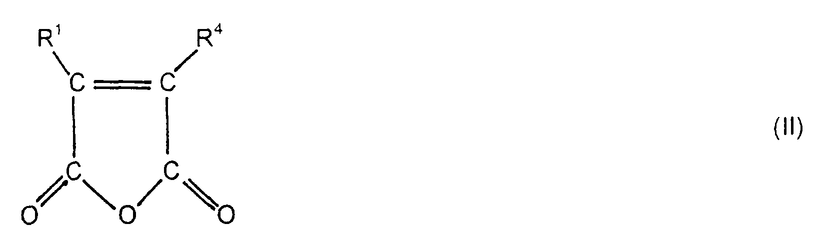

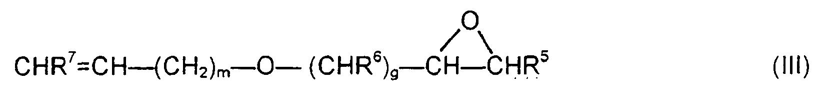

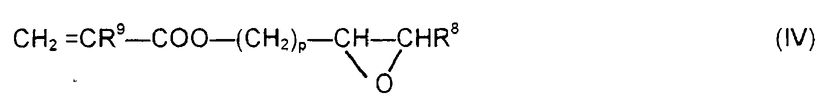

wobei R¹ bis R⁹ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R¹ bis R⁹ Wasserstoff, wobei m für 0 oder 1 und g für 1 steht. Die entsprechenden Verbindungen sind Maleinsäure, Fumarsäure, Maleinsäureanhydrid, Allylglycidylether und Vinylglycidylether.

Bevorzugte Verbindungen der Formeln I, II und IV sind Maleinsäure, Maleinsäureanhydrid und Epoxygruppen enthaltende Ester der Acrylsäure und/oder Methacrylsäure, wie Glycidylacrylat, Glycidylmethacrylat und die Ester mit tertiären Alkoholen, wie t-Butylacrylat. Letztere weisen zwar keine freien Carboxylgruppen auf, kommen in ihrem Verhalten aber den freien Säuren nahe und werden deshalb als Monomere mit latenten Carboxylgruppen bezeichnet.

Vorteilhaft bestehen die Copolymeren aus 50 bis 98 Gew.-% Ethylen, 0,1 bis 20 Gew.-% Epoxygruppen enthaltenden Monomeren und/oder Säureanhydridgruppen enthaltenden Monomeren sowie der restlichen Menge an (Meth)acrylsäureestern.

Besonders bevorzugt sind Copolymerisate aus

| | |
|---|---|
| 50 bis 98, | insbesondere 55 bis 95 Gew.-% Ethylen, |
| 0,1 bis 40, | insbesondere 0,3 bis 20 Gew.-% Glycidylacrylat und/oder Glycidylmethacrylat, (Meth)acrylsäure und/oder Maleinsäureanhydrid, und |
| 1 bis 45, | insbesondere 10 bis 40 Gew.-% n-Butylacrylat und/oder 2-Ethylhexylacrylat. |

Weitere bevorzugte Ester der Acryl- und/oder Methacrylsäure sind die Methyl-, Ethyl-, Propyl- und i- bzw. t-Butylester. Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperatur von mehr als 20°C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Carboxyl-, latente Carboxyl-, Amino- oder Amidgruppen sowie funktionelle Gruppen, die durch Mitverwendung von Monomeren der allgemeinen Formel 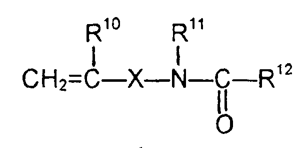 eingeführt werden können,
wobei die Substituenten folgende Bedeutung haben können:
- R¹⁰: Wasserstoff oder eine C₁ -C₄-Alkylgruppe,
- R¹¹: Wasserstoff oder eine C₁-C₈-Alkylgruppe oder eine Arylgruppe, insbesondere Phenyl,
- R¹²: Wasserstoff, eine C₁-C₁₀-Alkyl-, eine C₆-C₁₂-Arylgruppe oder -OR¹³
- R¹³: eine C₁-C₈-Alkyl- oder C₆-C₁₂-Arylgruppe, die gegebenenfalls mit O- oder N-haltigen Gruppen substituiert sein können,
- X: eine chemische Bindung, eine C₁-C₁₀-Alkylen- oder C₆-C₁₂-Arylengruppe oder 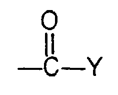
- Y: O-Z oder NH-Z und
- Z: eine C₁-C₁₀-Alkylen- oder C₆-C₁₂-Arylengruppe.

Auch die in der EP-A-0,208, 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)-ethylmethacrylat, (N,N-Dimethylamino)-ethylacrylat, (N,N-Dimethylamino)-methylacrylat und (N,N-Diethylamino)-ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A-0,050,265 beschriebenen Verbindungen.

Ferner können auch sogenannte pfropfvernetzende Monomere (graft-linking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe oder die anderen reaktiven Gruppen z.B. deutlich langsamer polymerisiert bzw. polymerisieren. Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfpolymonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Alkylgruppen enthaltende Monomere, insbesondere Allylester von ethylenisch ungesättigten Carbonsäuren wie Allylacrylat, Allylmethacrylat, Diallylmaleat, Diallylfumarat, Diallylaconat, Diallylitaconat oder die entsprechenden Monoallylverbindungen dieser Di- bzw. Tricarbonsäuren. Daneben gibt es eine Vielzahl weiterer geeigneter pfropfvernetzender Monomerer, für nähere Einzelheiten sei hier beispielsweise auf die US-PS 4,148,846 verwiesen.

Im allgemeinen beträgt der Anteil dieser vernetzenden Monomeren an dem schlagzäh modifizierenden Polymer bis zu 5 Gew.-%, vorzugsweise nicht mehr als 3 Gew.-%, bezogen auf das schlagzäh modifizierende Polymere.

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Typ | Monomere für den Kern | Monomere für die Hülle |
|---|---|---|
| I | Buta-1,3-dien, Isopren, n-Butylacrylat, Ethylhexylacrylat oder deren Mischungen | Styrol, Acrylnitril, Methylmethacrylat |
| | wie I aber unter Mitverwendung von Vernetzern | wie I |
| III | wie I oder II | n-Butylacrylat, Ethylacrylat, Methylacrylat, Buta-1,3-dien, Isopren, Ethylhexylacrylat |
| IV | wie I oder II | wie I oder III aber unter Mitverwendung von Monomeren mit reaktiven Gruppen wie hierin beschrieben |
| V | Styrol, Acrylnitril, Methylmethacrylat oder deren Mischungen | erste Hülle aus Monomeren wie unter I und II für den Kern beschrieben, zweite Hülle wie unter I oder IV für die Hülle beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Beispiele für bevorzugte Emulsionspolymerisate sind n-Butylacrylat/(Meth) acrylsäure-Copolymere, n-Butylacrylat/Glycidylacrylat- oder n-Butylacrylat/Glycidylmethacrylat-Copolymere, Pfropfpolymerisate mit einem inneren Kern aus n-Butylacrylat oder auf Butadienbasis und einer äußeren Hülle aus den vorstehend genannten Copolymeren und Copolymere von Ethylen mit Comonomeren, die reaktive Gruppen liefern.

Die beschriebenen Elastomere können auch nach anderen üblichen Verfahren, z.B. durch Suspensionspolymerisation hergestellt werden.

Weitere bevorzugte Kautschuke sind Polyurethane, wie in den EP-A-0,115,846; EP-A-0,115,847; EP-A-0,116,456; EP-A-0,117,664 und der EP-A-0,327,384 beschrieben. Kommerziell im Handel sind solche Produkte z.B. unter den Bezeichnungen Desmopan® (Bayer AG) oder Elastollan® (Elastogran Polyurethane GmbH) erhältlich.

Siliconkautschuke, wie in der DE-A-3,725,576, der EP-A-0,235,690, der DE-A-3,800,603 und der EP-A-0,319,290 beschrieben, sind ebenfalls bevorzugt.

Selbstverständlich können auch Mischungen der vorstehend aufgeführten Kautschuktypen eingesetzt werden.

Das erfindungsgemäße Verfahren ist gekennzeichnet durch Mischen der Ausgangskomponenten und deren anschließende Behandlung im Vakuum bei 230 bis 330°C, vorzugsweise 250 bis 300°C, hergestellt, wobei darauf zu achten ist, daß pro Mol eingesetztes Aluminiumhydroxid zwischen 0,9 und 1,2 Mol Wasser bei der Behandlung entfernt werden.

Die Mischung der Ausgangskomponenten erfolgt in an sich bekannter Weise in üblichen Mischvorrichtungen. Die Reihenfolge der Zugabe ist unkritisch.

Anschließend wird das Gemisch, vorzugsweise unter Durchmischung, auf eine Temperatur von 230 bis 330°C, vorzugsweise 250 bis 300°C, aufgeheizt. Das Anlegen des Vakuums kann bereits mit Beginn des Aufheizens erfolgen oder auch wenn die gewünschte Temperatur erreicht ist. Die eigentlich Behandlung kann isotherm erfolgen, es ist jedoch vorteilhaft, innerhalb des vorstehend genannten Bereiches ein Temperaturprogramm zu durchlaufen. Das anzulegende Vakuum beträgt zwischen 0,1 und 100 mbar, vorzugsweise 0,5 bis 50 mbar, insbesondere 1 bis 25 mbar.

Das Vakuum wird vorzugsweise so eingestellt, daß mindestens 0,9 Mol, vorzugsweise 0,9 bis 1,2 Mol Wasser pro Mol eingesetztes Aluminiumhydroxid aus dem Gemisch entfernt wird. Die Behandlungsdauer richtet sich nach dem gewählten Vakuum und der Temperatur. Üblicherweise wird die Behandlung als abgeschlossen angesehen, wenn die vorstehend genannte Wassermenge gesammelt wurde.

Anschließend wird die behandelte Formmasse abgekühlt und vorzugsweise mit trockener Luft bzw. einem trockenen, inerten Gas beaufschlagt und zerkleinert. Der erstarrte Schmelzkuchen zeichnet sich durch eine besonders glatte Oberfläche aus.

Erfolgt die vorstehende Behandlung in einem Extruder oder Kessel mit einer Zuleitung zu einem Extruder, so kann die behandelte Formmasse auch direkt extrudiert werden.

Die Zugabe der weiteren Zusatzstoffe kann unmittelbar nach der Behandlung oder aber durch Mischen des zerkleinerten behandelten Granulates erfolgen.

Aufgrund des hohen Aluminiumhydroxid-Gehaltes der erfindungsgemäßen Formmasse kann diese auch als Konzentrat verstanden werden. Demzufolge kann die erfindungsgemäße Formmasse zur Weiterverarbeitung auch noch mit weiteren thermoplastischen Polyestern gemischt werden, wobei sich die Flammfestigkeit des Endproduktes nicht wesentlich verändert.

Die nach dem erfindungsgemäßen Verfahren erhaltenen thermoplastischen Formmassen zeichnen sich durch Flammfestigkeit bei gleichzeitig guten mechanischen und elektrischen Eigenschaften aus. Sie eignen sich zur Herstellung von Formkörpern, worunter auch Fasern und Folien verstanden werden. Dementsprechend sind die Verwendung der erfindungsgemäßen Formmasse zur Herstellung von Formkörpern, sowie Formkörper enthaltend die erfindungsgemäße Formmasse auch Gegenstand der Erfindung.

### Beispiel

### Verfahren zur Herstellung der thermoplastischen Formmassen

180 Gramm Polybutylenterephthalat (PBT) werden unter Inertgas (Argon) auf 260°C erwärmt. In die PBT-Schmelze werden portionsweise 120 Gramm (1,538 mol) Aluminiumhydroxid Al(OH)₃ unter intensiver Durchmischung eingetragen. Anschließend wird ein Vakuum von 20 mbar angelegt und die Temperatur der Suspension auf 285°C gesteigert. In einer nachgeschalteten Kühlfalle wird abgespaltenes Wasser aufgefangen. Nach insgesamt 35 Minuten bei 285°C wurde kein neuerlich abgespaltenes Wasser beobachtet. Insgesamt wurden 30,6 Gramm Wasser (pH 6,0) aufgefangen. Dies entspricht 1,1 Mol Wasser pro Mol eingesetztes Al(OH)₃.

Die abgekühlte Schmelze konnte problemlos aus dem Reaktor entnommen werden. Die Oberfläche des Schmelzkuchens ist besonders glatt und von hoher Gleichmäßigkeit.

Die erhaltene Formmasse wurde einem Vorab-Brandversuch mit einer offenen Flamme unterworfen, mit dem Ergebnis, daß die erfindungsgemäße Formmasse selbsterlöschend ist.

## Patentansprüche

1. Verfahren zur Herstellung einer Aluminiumhydroxid-haltigen thermoplastischen Polyester-Formmasse, **dadurch gekennzeichnet, dass** ein Gemisch enthaltend 60 - 90 Gew.-% eines thermoplastischen Polyesters und 10 - 40 Gew.-% Aluminiumhydroxid bei 230 bis 330°C im Vakuum bei 0,1 bis 100 mbar behandelt wird, wobei pro Mol eingesetztes Aluminiumhydroxid zwischen 0,9 und 1,2 Mol Wasser entfernt wird.

2. Verfahren gemäß Anspruch 1, **dadurch gekennzeichnet, daß** der thermoplastische Polyester Polyethylenterephthalat, Polyethylennaphthalat, Polypropylenterephthalat, Polybutylenterephthalat oder eine Mischungen derselben ist.

3. Verfahren gemäß Anspruch 1, **dadurch gekennzeichnet, daß** die Polyester-Formmasse 0 bis 40 Gew.-% faser- oder teilchenförmige Füllstoffe oder deren Mischungen enthält, wobei die faser- oder teilchenförmigen Füllstoffe nicht Aluminiumhydroxid sind oder enthalten.

4. Verfahren gemäß Anspruch 1, **dadurch gekennzeichnet, daß** die Behandlung bei Temperaturen zwischen 250 und 300°C erfolgt.

5. Verfahren gemäß Anspruch 1, **dadurch gekennzeichnet, daß** innerhalb des spezifizierten Temperaturbereiches ein Temperaturprogramm durchlaufen wird.

6. Verwendung einer Formmasse hergestellt nach dem Verfahren der Ansprüche 1 bis 5 zur Herstellung von Formkörpern.

## Claims

1. A process for producing a thermoplastic polyester molding composition comprising aluminum hydroxide, which comprises treating a mixture comprising from 60 to 90% by weight of a thermoplastic polyester and from 10 to 40% by weight of aluminum hydroxide at from 230 to 330°C at subatmospheric pressure of from 0.1 to 100 mbar, where from 0.9 to 1.2 mol of water is removed per mole of aluminum hydroxide used.

2. The process as claimed in claim 1, wherein the thermoplastic polyester is polyethylene terephthalate, polyethylene naphthalate, polypropylene terephthalate, polybutylene terephthalate or a mixture of these.

3. The process as claimed in claim 1, wherein the polyester molding composition comprises from 0 to 40% by weight of fibrous or particulate fillers or a mixture of these, where the fibrous or particulate fillers are not, and do not comprise, aluminum hydroxide.

4. The process as claimed in claim 1, wherein the treatment takes place at temperatures of from 250 to 300°C.

5. The process as claimed in claim 1, wherein a temperature profile is traversed within the specified temperature range.

6. The use of a molding composition prepared by the process of claims 1 to 5 for producing moldings.

## Revendications

1. Procédé de préparation d'une masse à mouler de polyester thermoplastique contenant de l'hydroxyde d'aluminium, **caractérisé en ce que** l'on traite un mélange contenant de 60 à 90% en poids d'un polyester thermoplastique et de 10 à 40% en poids d'hydroxyde d'aluminium, à une température de 230 à 330°C, sous une dépression de 0,1 à 100 mbar, et que l'on élimine, par mole d'hydroxyde d'aluminium mis en oeuvre, de 0,9 à 1,2 mole d'eau.

2. Procédé suivant la revendication 1, **caractérisé en ce que** le polyester thermoplastique est du polyéthylène téréphtalate, du polyéthylène naphtalate, du polypropylène téréphtalate, du polybutylène téréphtalate ou un mélange de ceux-ci.

3. Procédé suivant la revendication 1, **caractérisé en ce que** les masses à mouler de polyester contiennent de 0 à 40% en poids de charges fibreuses ou particulaires, ou leurs mélanges, les charges fibreuses ou particulaires n'étant pas de l'hydroxyde d'aluminium ou n'en contenant pas.

4. Procédé suivant la revendication 1, **caractérisé en ce que** le traitement a lieu à des températures de 250 à 300°C.

5. Procédé suivant la revendication 1, **caractérisé en ce que**, dans la plage de température spécifiée, est parcouru un programme de température.

6. Utilisation d'une masse à mouler préparée par le procédé suivant les revendications 1 à 5 pour la préparation de corps moulés.
